# EUROPÄISCHE PATENTANMELDUNG

(11) **EP 2 221 331 A1**
(43) Veröffentlichungstag der Anmeldung: **25.08.2010**
(21) Anmeldenummer: 09153120.2
(22) Anmeldetag: 18.02.2009
(51) Int. Cl.: C08G 18/10, C08G 18/48, C08G 18/75, C09J 175/02, C07F 7/18

(54) **Silanterminierte Polyurethanpolymere**

(71) Anmelder: Sika Technology AG, 6340 Baar (CH)
(72) Erfinder: Choffat, Fabien, 5600 Lenzburg (CH)
(74) Vertreter: Sika Patent Attorneys

(57) **Zusammenfassung**

Die vorliegende Erfindung betrifft neuartige Polymere, welche sich für den Einsatz in feuchtigkeitshärtenden Zusammensetzungen basierend auf silanfunktionellen Polyurethanpolymeren eignen. Derartige Zusammensetzungen werden insbesondere als Klebstoffe, Dichtstoffe oder Beschichtungen eingesetzt.

## Beschreibung

### Technisches Gebiet

Die vorliegende Erfindung betrifft das Gebiet der silanterminierten Polyurethanpolymere, wie sie in elastischen Klebstoffen, Dichtstoffen und Beschichtungen eingesetzt werden.

### Stand der Technik

Feuchtigkeitshärtende Zusammensetzungen auf der Basis silanfunktioneller Polymere werden seit geraumer Zeit als elastische Klebstoffe, Dichtstoffe und Beschichtungen eingesetzt. Da sie frei sind von Isocyanatgruppen, stellen sie aus toxikologischer Sicht eine bevorzugte Alternative zu isocyanathaltigen Polyurethanzusammensetzungen dar.

Als feuchtigkeitsreaktive Polymere werden dabei oftmals silanterminierte Polyurethanpolymere eingesetzt, wie sie erhältlich sind aus der Umsetzung eines Isocyanatgruppen aufweisenden Polyurethanpolymers mit einem Silan, welches mindestens eine gegenüber Isocyanatgruppen reaktive organische Gruppe aufweist. Meistens handelt es sich bei den Silanen um Amino- oder Mercaptosilane. Derartige silanterminierte Polyurethanpolymere, deren Verwendung als Klebstoffe, Dichtstoffe und Beschichtungen sowie Zusammensetzungen umfassend solche Polyurethanpolymere sind weitgehend bekannt und im Stand der Technik beschrieben.

Dabei weisen die silanfunktionellen Polyurethanpolymere, welche mit Hilfe von Mercaptosilanen hergestellt werden, den Nachteil auf, dass sie einen sehr unangenehmen Geruch aufweisen. Silanfunktionelle Polyurethanpolymere, welche mit Hilfe von Aminosilanen hergestellt werden, weisen oftmals den Nachteil auf, dass sie eine eher niedrige Dehnung und eine ungenügende Lagerstabilität, insbesondere nach thermischer Lagerung, aufweisen. Weiterhin weisen sie oftmals ungünstig hohe Viskositäten auf.

### Darstellung der Erfindung

Aufgabe der vorliegenden Erfindung ist es daher, silanfunktionelle Polyurethanpolymere für den Einsatz in Klebstoffen, Dichtstoffen und Beschichtungen zur Verfügung zu stellen, welche gegenüber dem Stand der Technik verbesserte oder zumindest gleichwertige Eigenschaften aufweisen.

Überraschenderweise wurde nun gefunden, dass Polymere gemäss Anspruch 1 diese Aufgabe lösen.
Derartige Polymere eignen sich bestens für den Einsatz als silanterminierte Polyurethanpolymere in feuchtigkeitshärtenden Zusammensetzungen. Ein Vorteil des Einsatzes von neuen silanterminierten Polyurethanpolymeren ist, dass sie es erlauben, für deren Herstellung eine breitere Auswahl an Rohstoffen und Ausgangsmaterialien einzusetzen. Hinzu kommt, dass die erfindungsgemässen Zusammensetzungen geruchsneutral sind und eine gute Lagerstabilität aufweisen.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist in einem ersten Aspekt ein Polymer der Formel (I).

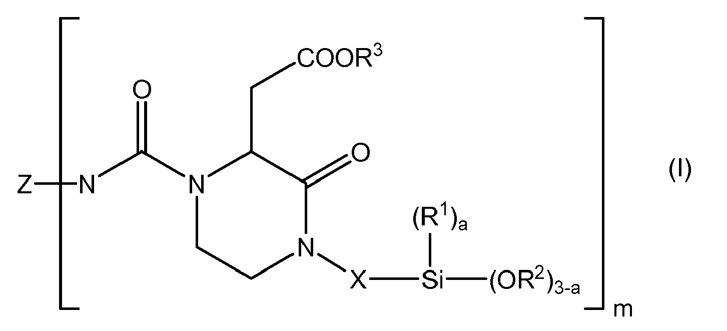

Der Rest R¹ steht dabei für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cycloaliphatische und/oder aromatische Anteile aufweist.
Der Rest R² steht für einen Acylrest oder für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cycloaliphatische und/oder aromatische Anteile aufweist.
Der Index a steht für einen Wert von 0, 1 oder 2.
Insbesondere steht der Rest R² unabhängig voneinander für eine Methyl- oder Ethyl- oder Isopropylgruppe und der Index a für einen Wert von 0 oder 1, insbesondere von 0.
Weiterhin steht der Rest R³ für einen linearen oder verzweigten, einwertigen Kohlenwasserstoffrest mit 1 bis 12 C-Atomen. Insbesondere steht der Rest R³ für eine Methyl- oder Ethylgruppe.
X steht für einen linearen oder verzweigten, zweiwertigen Kohlenwasserstoffrest mit 1 bis 6 C-Atomen, welcher gegebenenfalls ein oder mehrere Heteroatome und gegebenenfalls eine oder mehrere C-C-Mehrfachbindungen und/oder gegebenenfalls cycloaliphatische und/oder aromatische Anteile aufweist. Insbesondere steht X für eine Methylen-, n-Propylen-, 3-Aza-n-hexylen-, oder 3-Aza-n-pentylengruppe.
Z steht für einen m-wertigen Rest eines Isocyanatgruppen aufwiesenden Polyurethanpolymers **PUR** nach Entfernung von m Isocyanatgruppen.
Der Index m steht für einen Wert von 1 bis 4. Insbesondere steht der Index m für einen Wert von 1 oder 2.

Innerhalb einer Silangruppe im Polymer der Formel (I) stehen R¹ und R² jeweils unabhängig voneinander für die beschriebenen Reste. So sind beispielsweise auch Polymere der Formel (I) mit Endgruppen möglich, welche Ethoxydimethoxysilan-Endgruppen (R² = Methyl, R² = Methyl, R² = Ethyl) sind.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.
Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).
Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.
Unter "Molekulargewicht" versteht man im vorliegenden Dokument stets das Molekulargewichtsmittel Mₙ (Zahlenmittel).

Das Isocyanatgruppen aufweisende Polyurethanpolymer **PUR** ist insbesondere erhältlich aus mindestens einem Polyol und mindestens einem Polyisocyanat.
Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden. Insbesondere ist dabei das Polyisocyanat so dosiert, dass dessen Isocyanatgruppen im Verhältnis zu den Hydroxylgruppen des Polyols im stöchiometrischen Überschuss vorhanden sind.
Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.
Gegebenenfalls kann das Polyurethanpolymer **PUR** unter Mitverwendung von Weichmachern hergestellt werden, wobei die verwendeten Weichmacher keine gegenüber Isocyanaten reaktive Gruppen enthalten.
Bevorzugt sind Polyurethanpolymere **PUR** mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Isocyanatgruppen aufweisenden Polyurethanpolymers PUR sind insbesondere Polyetherpolyole, Polyesterpolyole und Polycarbonatpolyole sowie Mischungen dieser Polyole.
Bevorzugt ist das Polyol ein Polyetherpolyol oder ein Polyesterpolyol.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.
Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.
Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.
Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.
Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche aliphatische, cycloaliphatische oder aromatische Polyisocyanate, insbesondere Diisocyanate, verwendet werden.
Beispielsweise sind das Diisocyanate, deren Isocyanatgruppen an jeweils ein aliphatisches, cycloaliphatisches oder arylaliphatisches C-Atom gebunden sind, auch "aliphatische Diisocyanate" genannt, wie 1,6-Hexamethylendiisocyanat (HDI), 1,4-Tetramethylendiisocyanat, 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3-und 1,4-Bis-(isocyanatomethyl)-cyclohexan, m- und p-Xylylendiisocyanat (mund p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Bevorzugt handelt es sich beim Diisocyanat um Diphenylmethandiisocyanat (MDI), Toluylendiisocyanat (TDI), 1,6-Hexamethylendiisocyanat (HDI) oder 1-Isocyanato-3,3,5-trimethyl-5-isocyanatomethyl-cyclohexan (IPDI).

In einem weiteren Aspekt betrifft die vorliegende Erfindung ein Verfahren zur Herstellung eines Polymers der Formel (I) gemäss vorhergehender Beschreibung umfassend die Schritte
i) Umsetzung eines Aminosilans **AS** der Formel (II) 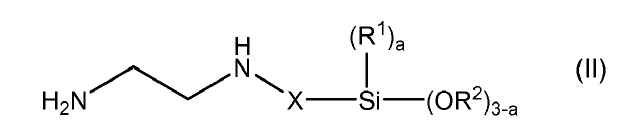 mit einem Malein- oder Fumarsäurediester der Formel (III);

   R³OOC-CH=CH-COOR³ (III)
ii) Umsetzung des Reaktionsprodukts aus Schritt i) mit einem Isocyanatgruppen aufweisenden Polyurethanpolymer mit m Isocyanatgruppen.

Die Reste R¹, R², R³, X sowie die Indices a und m sind bereits vorhergehend beschrieben worden.

Die Umsetzung des Aminosilans **AS** der Formel (II) mit dem Malein- oder Fumarsäurediester der Formel (III) im Schritt i) des Verfahrens zur Herstellung eines Polymers der Formel (I) erfolgt vorzugsweise innerhalb eines Temperaturbereichs von 0 bis 140 °C, vorzugsweise von 40 bis 100 °C. Die Mengenverhältnisse sind in der Regel so gewählt, dass die Ausgangsverbindungen im stöchiometrischen Verhältnis von etwa 1:1 eingesetzt werden.
Bei der Umsetzung kommt es zunächst zu einer Addition des Malein- oder Fumarsäurediesters der Formel (III) an die NH₂-Gruppe des Aminosilans **AS.** Derartige Umsetzungen von primären Aminosilanen mit Malein- oder Fumarsäurediester werden auch als Michael-artige Additionsreaktionen bezeichnet und sind dem Fachmann bekannt. Beispielsweise sind sie beschrieben in US 5,364,955, dessen gesamte Offenbarung hiermit durch Bezugnahme eingeschlossen wird.

Im Anschluss an die Additionsreaktion kommt es zu einer intramolekularen Kondensationsreaktion unter Abspaltung des Alkohols R³-OH. Dabei entsteht ein Piperazinonderivat der Formel (IV).

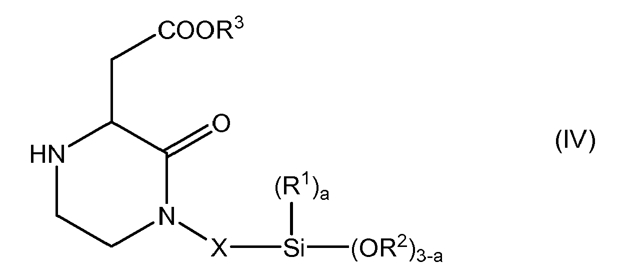

Derartige Piperazinonderivate sind dem Fachmann ebenfalls bekannt und beispielsweise beschrieben in US 6,599,354 B1, dessen gesamte Offenbarung hiermit durch Bezugnahme eingeschlossen wird.

Die Umsetzung des Aminosilans **AS** der Formel (II) mit dem Malein- oder Fumarsäurediester der Formel (III) kann in Substanz oder auch in Gegenwart von Lösungsmitteln wie z.B. Dioxan durchgeführt werden. Die Mitverwendung von Lösungsmitteln ist jedoch weniger bevorzugt.
Selbstverständlich können auch Mischungen verschiedener Aminosilane **AS** der Formel (II) mit Mischungen von Fumar- und/oder Maleinsäureestern umgesetzt werden.
Der bei der Cyclokondensationsreaktion entstehende Alkohol R³-OH kann bei Bedarf destillativ aus dem Reaktionsgemisch entfernt werden. Die erhaltenen silanfunktionellen Piperazinonderivate der Formel (IV) sind farblose Flüssigkeiten, die nach Abdestillieren des Alkohols R³-OH in so hoher Reinheit anfallen, dass eine destillative Aufarbeitung in der Regel nicht notwendig ist.

Die Umsetzung des Reaktionsprodukts aus Schritt i) mit dem Isocyanatgruppen aufweisenden Polyurethanpolymer **PUR** mit m Isocyanatgruppen erfolgt in einem dem Fachmann bestens bekannten Verfahren, vorzugsweise in einem stöchiometrischen Verhältnis der gegenüber Isocyanatgruppen reaktiven sekundären Aminogruppe des Piperazinonderivats zu den Isocyanatgruppen des Polyurethanpolymers **PUR** von 1:1 oder mit einem leichten Überschuss an gegenüber Isocyanatgruppen reaktiven Aminogruppen, so dass das resultierende silanfunktionelle Polymer der Formel (I) gänzlich frei von Isocyanatgruppen ist.
Beispielsweise erfolgt die Umsetzung des Polyurethanpolymers **PUR** mit dem Reaktionsprodukt aus Schritt i) in einem Temperaturbereich von 0 bis 150 °C, insbesondere von 20 bis 80 °C. Die Reaktionsdauer ist unter anderem abhängig von den eingesetzten Ausgangsstoffen sowie von der gewählten Reaktionstemperatur, sodass der Reaktionsverlauf typischerweise mittels IR-Spektroskopie verfolgt wird um das Ende der Reaktion zu bestimmen. Bevorzugt wird die Reaktion abgebrochen, sobald im Reaktionsgemisch keine freien Isocyanatgruppen mehr nachgewiesen werden können. In einer bevorzugten Ausführungsform wird für diese Reaktion kein Katalysator eingesetzt.

In einem weiteren Aspekt betrifft die Erfindung die Verwendung eines Reaktionsprodukts aus der Umsetzung eines Aminosilans **AS** der Formel (II) 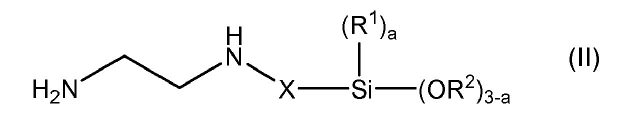 mit einem Malein- oder Fumarsäurediester der Formel (III)

R³OOC-CH=CH-COOR³ (III)

als Reaktionspartner für Isocyanatgruppen aufweisende Polyurethanpolymere oder für Polyisocyanate bei der Herstellung von silanfunktionellen Polymeren.
Die Reste R¹, R², R³, X sowie der Index a sind bereits vorhergehend beschrieben worden.

Des Weiteren betrifft die vorliegende Erfindung eine Zusammensetzung zur Herstellung von Klebstoffen, Dichtstoffen oder Beschichtungen umfassend mindestens ein Polymer der Formel (I) gemäss vorhergehender Beschreibung.

Üblicherweise ist das silanfunktionelle Polymer in einer Menge von 10 bis 80 Gew.-%, bevorzugt in einer Menge von 15 bis 70 Gew.-%, bezogen auf die gesamte Zusammensetzung, vorhanden.

Vorzugsweise enthält die Zusammensetzung weiterhin mindestens einen Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.
Es ist durchaus möglich und kann sogar von Vorteil sein, eine Mischung verschiedener Füllstoffe einzusetzen.
Eine geeignete Menge Füllstoff liegt beispielsweise im Bereich von 20 bis 60 Gew.-%, bevorzugt 30 bis 60 Gew.-%, bezogen auf die gesamte Zusammensetzung.

Weiterhin enthält die erfindungsgemässe Zusammensetzung insbesondere mindestens einen Katalysator für die Vernetzung der Polymere der Formel (I) mittels Feuchtigkeit. Derartige Katalysatoren sind insbesondere Metallkatalysatoren in Form von Organozinnverbindungen wie Dibutylzinndilaurat und Dibutylzinndiacetylacetonat, Titankatalysatoren, Aminogruppenhaltige Verbindungen, beispielsweise 1,4-Diazabicyclo[2.2.2]octan und 2,2'-Dimorpholinodiethylether, Aminosilane sowie Mischungen der genannten Katalysatoren.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Es ist vorteilhaft, alle genannten, in der Zusammensetzung gegebenenfalls vorhandenen Bestandteile, insbesondere Füllstoff und Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Die Lagerstabilität der Zusammensetzungen kann einerseits über die Auspresskraft und andererseits über die Hautbildungszeit abgeschätzt werden. Eine signifikante Zunahme der Auspresskraft und/oder der Hautbildungszeit nach Lagerung der Zusammensetzungen deutet auf eine schlechte Lagerstabilität hin.
Ebenfalls kann die Lagerstabilität über die Viskosität der Zusammensetzung oder über die Viskosität des in der Zusammensetzung eingesetzten reaktiven Polymers der Formel (I) bestimmt werden.

Bei der Applikation der beschriebenen Zusammensetzung auf mindestens einen Festkörper oder Artikel kommen die Silangruppen des Polymers in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus. Dieser Prozess wird auch als Vernetzung bezeichnet.
Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt und verlangsamt sich in der Regel mit dem Fortschreiten der Aushärtung.

Weiterhin umfasst die vorliegende Erfindung die Verwendung einer vorhergehend beschriebenen Zusammensetzung als Klebstoff, Dichtstoff oder als Beschichtung.

Die erfindungsgemässe Zusammensetzung wird insbesondere verwendet in einem Verfahren des Verklebens zweier Substrate S1 und S2 umfassend die Schritte
i') Applikation einer Zusammensetzung gemäss vorhergehender Beschreibung auf ein Substrat S1 und/oder ein Substrat **S2**;
ii') Kontaktieren der Substrate S1 und S2 über die applizierte Zusammensetzung innerhalb der Offenzeit der Zusammensetzung;
iii') Aushärtung der Zusammensetzung mittels Wasser, insbesondere in der Form von Luftfeuchtigkeit;
   wobei die Substrate **S1** und **S2** gleich oder verschieden voneinander sind.

Bevorzugt wird die erfindungsgemässe Zusammensetzung auch verwendet in einem Verfahren der Abdichtung oder des Beschichtens umfassend die Schritte
i") Applikation einer Zusammensetzung gemäss vorhergehender Beschreibung auf ein Substrat **S1** und/oder zwischen zwei Substrate **S1** und **S2**;
ii") Aushärtung der Zusammensetzung mittels Wasser, insbesondere in der Form von Luftfeuchtigkeit;
wobei die Substrate **S1** und **S2** gleich oder verschieden voneinander sind.

Als Substrate **S1** und/oder **S2** eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff und Lack.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen der Zusammensetzung sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Weiterhin betrifft die Erfindung eine ausgehärtete Zusammensetzung, welche durch die Reaktion einer vorhergehend beschriebenen Zusammensetzung mit Wasser, insbesondere in Form von Luftfeuchtigkeit erhältlich ist.

Bei den Artikeln, welche mit einer erfindungsgemässen Zusammensetzung verklebt, abgedichtet oder beschichtet werden, handelt es sich insbesondere um ein Gebäude oder ein Bauwerk des Hoch- oder Tiefbaus, ein industriell gefertigtes Gut oder ein Konsumgut, insbesondere ein Fenster, eine Haushaltsmaschine, oder ein Transportmittel, insbesondere ein Fahrzeug, oder ein Anbauteil eines Fahrzeugs.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Zugfestigkeit,** die **Bruchdehnung,** und der **E-Modul** bei 0 bis 100% Dehnung wurden nach DIN EN 53504 (Zuggeschwindigkeit: 200 mm/min) an Filmen mit einer Schichtdicke von 2 mm bestimmt, welche während 7 Tagen bei 23 °C (Raumtemperatur, "RT") und 50% relativer Luftfeuchtigkeit aushärteten und zusätzlich während 4 Wochen bei den in Tabelle 1 angegebenen Bedingungen gelagert wurden.
Die **Shore A-Härte** wurde bestimmt nach DIN 53505.
Die **Lagerstabilität** wurde über die Messung der **Viskositäten** der jeweiligen silanfunktionellen Polyurethanpolymere nach unterschiedlichen Lagerungen bestimmt. Dafür wurden die silanfunktionellen Polyurethanpolymere unter Luftausschluss in Aluminiumtuben abgefüllt. Nach eintägiger (1d RT), 7-tägiger (7d RT) und 14-tägiger (14d RT) Lagerung bei Raumtemperatur und nach 14-tägiger Lagerung in einem Ofen bei 60 °C (14d 60 °C) wurde die Viskosität bei 20 °C auf einem thermostatisierten Kegel-Platten-Rheometer RC30 von der Firma Rheotec GmbH, Deutschland (Kegeldurchmesser 20 mm, Kegelwinkel 1°, Kegelspitze Plattenabstand 0.05 mm, Schergeschwindigkeit 50 s⁻¹) gemessen.

### Herstellung der Piperazinonderivate der Formel (IV)

Bei ca. 50 °C wurde 1 mol Aminosilan vorgelegt und anschliessend 1 mol Maleinsäurediester langsam zugegeben. Das Gemisch erwärmt sich bei der Zugabe auf ca. 60 °C. Bei dieser Temperatur wurde während 10 Stunden weitergerührt bis im sich im IR Spektrum die zwei C=O-Bandenverhältnisse nicht mehr veränderten (Bande bei ca. 1650 cm⁻¹ für die C=O-Schwingung im Piperazinonring und bei ca. 1750 cm⁻¹ für C=O Schwingung im Alkylesterrest).
Es wurden die folgenden Piperazinonderivate hergestellt:
***S-1*** mit difunktionellem Aminosilan (erhältlich unter dem Handelsnamen Silquest^{®} A-1120 von Momentive Performance Materials Inc., USA) und Maleinsäuredimethylester (erhältlich von Fluka Chemie GmbH, Schweiz);
***S-2*** mit difunktionellem Aminosilan (Silquest^{®} A-1120) und Maleinsäurediethylester (erhältlich von Fluka Chemie GmbH, Schweiz);
***S-3*** mit trifunktionellem Aminosilan (erhältlich unter dem Handelsnamen Silquest^{®} A-1130 von Momentive Performance Materials Inc., USA) und Maleinsäurediethylester (erhältlich von Fluka Chemie GmbH, Schweiz);

Als reaktive Silane wurden neben den oben beschriebenen Piperazinonderivaten ***S-1***, ***S-2*** und ***S-3*** die folgenden Silane eingesetzt (Referenzbeispiele):
***S-4***: difunktionelles Aminosilan (Silquest^{®} A-1120);
***S-5***: Aminosilan (Silquest^{®} A-1110 von Momentive Performance Materials Inc., USA);
***S-6***: Mercaptosilan (Dynasylan^{®} MTMO von Evonik Degussa GmbH, Deutschland).

### Herstellung der silanfunktionellen Polvurethanpolymere PS-1 bis PS-6

Unter Stickstoffatmosphäre wurden 700 g Polyol Acclaim^{®} 12200 (Bayer MaterialScience AG, Deutschland; low monol Polyoxypropylendiol; OH-Zahl 11.0 mg KOH/g; Wassergehalt ca. 0.02 Gew.-%), 31.7 g Isophorondiisocyanat (IPDI; Vestanat^{®} IPDI, Evonik Degussa GmbH, Deutschland), 85.4 g 2,2,4-Trimethyl-1,3-pentandioldiisobutyrat (Eastman TXIB; Eastman Chemical Company, USA) und 0.1 g Di-*n*-butyl-zinndilaurat (Metatin^{®} K 712, Acima AG, Schweiz) unter stetigem Rühren auf 90 °C aufgeheizt und bei dieser Temperatur belassen. Nach einer Stunde Reaktionszeit wurde mittels Titration ein freier Gehalt an Isocyanatgruppen von 0.70 Gew.-% erreicht. Anschliessend wurden 0.14 mol reaktives Silan beigefügt und für weitere 2 bis 3 Stunden bei 90 °C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23 °C) abgekühlt und unter Ausschluss von Feuchtigkeit aufbewahrt (theoretischer Polymergehalt = 90%).
Im silanfunktionellen Polyurethanpolymer ***PS-1*** wurde das reaktive Silan ***S-1*** eingesetzt, im ***PS-2*** das reaktive Silan ***S-2***, im ***PS-3*** das reaktive Silan ***S-3***, im ***PS-4*** (Referenz) das reaktive Silan ***S-4,*** im ***PS-5*** (Referenz) das reaktive Silan ***S-5*** und im ***PS-6*** (Referenz) das reaktive Silan ***S-6***.

**Tabelle 1 Viskositäten der hergestellten Polymere PS-1 bis PS-6 nach unterschiedlichen Lagerungen;**

| | | ***PS-1*** | ***PS-2*** | ***PS-3*** | ***PS-4*** | ***PS-5*** | ***PS-6*** |
|---|---|---|---|---|---|---|---|
| Viskosität [Pa·s] | 1d RT | 100 | 21 | 128 | gel ^{a)} | 50 | 30 |
| | 7d RT | 140 | 49 | 130 | gel ^{a)} | 82 | 35 |
| | 14d RT | 134 | 63 | 150 | gel ^{a)} | gel ^{a)} | 29 |
| | 14d 60 °C | 117 | 69 | 200 | gel ^{a)} | gel ^{a)} | 50 |

| | | | | | | | |
|---|---|---|---|---|---|---|---|
| ^{a)} gel = diese Polymere gelierten. | | | | | | | |

Das silanfunktionelle Polyurethanpolymer ***PS-4*** (Referenz) geliert bereits während der Herstellung, was die Verwendung eines solchen Polymers für Kleb- und Dichtstoffe verunmöglicht.
Das silanfunktionelle Polyurethanpolymer ***PS-5*** (Referenz) geliert bereits nach einer 14-tägigen Lagerung bei Raumtemperatur. Für einen Kleb- oder Dichtstoff ist eine derartig kurze Lagerstabilität ungünstig.

### Herstellung des Thixotropierungsmittels TM

In einem Vakuummischer wurden 1000 g Diisodecylphthalat (Palatinol^{®} Z, BASF SE, Deutschland) und 160 g 4,4'-Diphenylmethandiisocyanat (Desmodur^{®} 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropierungsmittel *TM* enthält 20 Gew.-% Thixotropierungsmittel in 80 Gew.-% Diisodecylphthalat.

### Herstellung der Klebstoffe

In einem Vakuummischer wurden entsprechend der in Tabelle 2 angegebenen Gewichtsanteilen das silanfunktionelle Polyurethanpolymer (***PS-1*** bis ***PS-3,*** sowie ***PS-5*** und ***PS-6***), Thixotropierungsmittel ***TM,*** Vinyltrimethoxysilan (Dynasylan^{®} VTMO, Evonik Degussa GmbH, Deutschland), UV-Stabilisator (Tinuvin^{®} 292, Ciba SC, Schweiz), Antioxidant (Tinuvin^{®} 1130, Ciba SC, Schweiz) und der Weichmacher Diisodecylphthalat (Jayflex DIDP, Exxon Mobil, USA) während 5 Minuten gut vermischt. Anschliessend wurden getrocknete gefällte Kreide (Socal^{®} U1S2, Solvay SA, Belgien), getrocknete hydrophile pyrogene Kieselsäure (Aerosil 200, Evonik, Deutschland) und Weisspigment (Titandioxid, Kronos 2500, Kronos International, USA) während 15 Minuten bei 60 °C eingeknetet. Bei ausgeschalteter Heizung wurden anschliessend 8 g N-(2-Aminoethyl)-(3-aminopropyl)trimethoxysilan (Silquest^{®} A-1120) und 1.6 g Di-*n*-butyl-zinndilaurat (Metatin^{®} K712) unter Vakuum während 10 Minuten zu einer homogenen Paste verarbeitet. Diese wurde dann in innenlackierte Aluminium-Spreizkolbenkartuschen abgefüllt.

Mit dem silanfunktionellen Polyurethanpolymer ***PS-4*** (Referenz) wurde kein Klebstoff hergestellt, da ***PS-4*** schon bei der Herstellung gelierte, d.h. vernetzte (vgl. Tabelle 1).

**Tabelle 2 Zusammensetzung in Gewichtsanteilen und Resultate.**

| | | ***1*** | ***2*** | ***3*** | ***Ref1*** | ***Ref2*** |
|---|---|---|---|---|---|---|
| ***PS-1*** | | 30 | | | | |
| ***PS-2*** | | | 30 | | | |
| ***PS-3*** | | | | 30 | | |
| ***PS-5*** | | | | | 30 | |
| ***PS-6*** | | | | | | 30 |
| Thixotropierungsmittel ***TM*** | | 4.5 | 4.5 | 4.5 | 4.5 | 4.5 |
| Dynasylan^{®} VTMO | | 2 | 2 | 2 | 2 | 2 |
| Tinuvin^{®} 292 | | 0.25 | 0.25 | 0.25 | 0.25 | 0.25 |
| Tinuvin^{®} 1130 | | 0.25 | 0.25 | 0.25 | 0.25 | 0.25 |
| Socal^{®} U1S2 | | 40 | 40 | 40 | 40 | 40 |
| Aerosil^{®} 200 | | 2 | 2 | 2 | 2 | 2 |
| Kronos^{®} 2500 | | 4 | 4 | 4 | 4 | 4 |
| Dynasylan^{®} DAMO-T | | 1 | 1 | 1 | 1 | 1 |
| Metatin^{®} K712 | | 0.1 | 0.1 | 0.1 | 0.1 | 0.1 |

| **Mechanische Eigenschaften** | | | | | | |
|---|---|---|---|---|---|---|
| Zugfestigkeit [MPa] | 7d RT + 4w RT | 1.87 | 1.78 | 1.94 | 2.04 | 2.11 |
| | 7d RT + 4w 70 °C | 1.99 | 1.65 | 1.79 | 1.77 | 1.74 |
| | 7d RT + 4w 80 °C | 1.81 | 1.58 | 1.76 | 1.80 | 1.28 |
| | 7d RT + 4w 90 °C | 1.65 | 1.52 | 1.65 | 1.61 | 0.76 |
| Bruchdehnung [%] | 7d RT + 4w RT | 269 | 183 | 153 | 187 | 284 |
| | 7d RT + 4w 70 °C | 279 | 210 | 160 | 178 | 260 |
| | 7d RT + 4w 80 °C | 280 | 218 | 191 | 209 | 218 |
| | 7d RT + 4w 90 °C | 282 | 234 | 204 | 208 | 161 |
| E-Modul 0-100% [MPa] | 7d RT + 4w RT | 0.97 | 1.17 | 1.41 | 1.35 | 1.11 |
| | 7d RT + 4w 70 °C | 1.00 | 0.98 | 1.25 | 1.17 | 0.88 |
| | 7d RT + 4w 80 °C | 0.89 | 0.91 | 1.11 | 1.09 | 0.72 |
| | 7d RT + 4w 90 °C | 0.80 | 0.81 | 0.97 | 0.97 | 0.49 |
| Härte Shore A | 14d RT | 36 | 39 | 44 | 46 | 43 |

Das Beispiel ***Ref1*** weist gegenüber den erfindungsgemässen Beispielen den Nachteil auf, dass es neben der eher niedrigen Dehnung eine geringere Lagerstabilität (vgl. Tabelle 1) aufweist.
Das Beispiel ***Ref2*** weist gegenüber den erfindungsgemässen Beispielen den Nachteil auf, dass die Zusammensetzung einen sehr unangenehmen Geruch aufweist.

## Patentansprüche

1. Polymer der Formel (I) 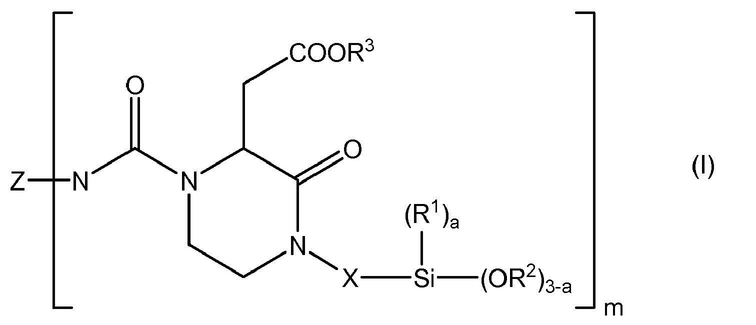 wobei
der Rest R¹ für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
der Rest R² für einen Acylrest oder für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
der Index a für einen Wert von 0, 1 oder 2 steht;
der Rest R³ für einen linearen oder verzweigten, einwertigen Kohlenwasserstoffrest mit 1 bis 12 C-Atomen steht;
X für einen linearen oder verzweigten, zweiwertigen Kohlenwasserstoffrest mit 1 bis 6 C-Atomen steht, welcher gegebenenfalls ein oder mehrere Heteroatome und gegebenenfalls eine oder mehrere C-C-Mehrfachbindungen und/oder gegebenenfalls cycloaliphatische und/oder aromatische Anteile aufweist;
Z für einen m-wertigen Rest eines Isocyanatgruppen aufweisenden Polyurethanpolymers **PUR** nach Entfernung von m Isocyanatgruppen steht; und
der Index m für einen Wert von 1 bis 4 steht.

2. Polymer gemäss Anspruch 1, **dadurch gekennzeichnet, dass** der Rest R² unabhängig voneinander für eine Methyl- oder Ethyl- oder Isopropylgruppe steht und der Index a für einen Wert von 0 oder 1, insbesondere von 0, steht.

3. Polymer gemäss einem der Ansprüche 1 oder 2, **dadurch gekennzeichnet, dass** der Rest R³ für eine Methyl- oder Ethylgruppe steht.

4. Polymer gemäss einem der Ansprüche 1 bis 3, **dadurch gekennzeichnet, dass** X für eine Methylen-, n-Propylen-, 3-Aza-n-hexylen- oder 3-Aza-n-pentylengruppe steht.

5. Polymer gemäss einem der Ansprüche 1 bis 4, **dadurch gekennzeichnet, dass** der Index m für einen Wert von 1 oder 2 steht.

6. Polymer gemäss einem der Ansprüche 1 bis 5, **dadurch gekennzeichnet, dass** das Polyurethanpolymer **PUR** aus mindestens einem Polyol und mindestens einem Polyisocyanat erhältlich ist, wobei das Polyisocyanat so dosiert ist, dass dessen Isocyanatgruppen im Verhältnis zu den Hydroxylgruppen des Polyols im stöchiometrischen Überschuss vorhanden sind.

7. Polymer gemäss Anspruch 6, **dadurch gekennzeichnet, dass** das Polyol ein Polyetherpolyol oder ein Polyesterpolyol ist.

8. Polymer gemäss Anspruch 6 oder 7, **dadurch gekennzeichnet, dass** das Diisocyanat Diphenylmethandiisocyanat (MDI), Toluylendiisocyanat (TDI), 1,6-Hexamethylendiisocyanat (HDI) oder 1-Isocyanato-3,3,5-trimethyl-5-isocyanatomethyl-cyclohexan (IPDI) ist.

9. Verfahren zur Herstellung eines Polymers der Formel (I) gemäss einem der Ansprüche 1 bis 8 umfassend die Schritte
i) Umsetzung eines Aminosilans AS der Formel (II) 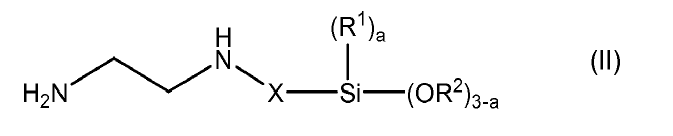 mit einem Malein- oder Fumarsäurediester der Formel (III)
R³OOC-CH=CH-COOR³ (III)
ii) Umsetzung des Reaktionsprodukts aus Schritt i) mit einem Isocyanatgruppen aufweisenden Polyurethanpolymer mit m Isocyanatgruppen.

10. Verwendung eines Reaktionsprodukts aus der Umsetzung eines Aminosilans **AS** der Formel (II) 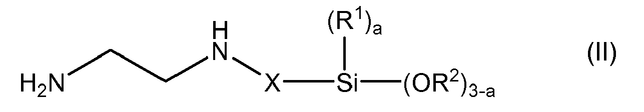 mit einem Malein- oder Fumarsäurediester der Formel (III)
R³OOC-CH=CH-COOR³ (III)
wobei die Reste R¹, R², R³, X sowie der Index a den Bezeichnungen aus Anspruch 1 entsprechen,
als Reaktionspartner für Isocyanatgruppen aufweisende Polyurethanpolymere oder für Polyisocyanate bei der Herstellung von silanfunktionellen Polymeren.

11. Zusammensetzung zur Herstellung von Klebstoffen, Dichtstoffen oder Beschichtungen umfassend mindestens ein Polymer der Formel (I) gemäss einem der Ansprüche 1 bis 8.

12. Zusammensetzung gemäss Anspruch 11, **dadurch gekennzeichnet, dass** der Anteil des Polymers der Formel (I) 5 bis 80 Gew.-%, insbesondere 7 bis 70 Gew.-%, bevorzugt 10 bis 50 Gew.-%, bezogen auf die gesamte Zusammensetzung beträgt.

13. Zusammensetzung gemäss einem der Ansprüche 11 oder 12, **dadurch gekennzeichnet, dass** die Zusammensetzung zusätzlich mindestens einen Füllstoff enthält.

14. Zusammensetzung gemäss einem der Ansprüche 11 bis 13, **dadurch gekennzeichnet, dass** die Zusammensetzung zusätzlich mindestens einen Katalysator für die Vernetzung der Polymere der Formel (I) mittels Feuchtigkeit enthält.

15. Verwendung einer Zusammensetzung gemäss einem der Ansprüche 11 bis 14 als Klebstoff, Dichtstoff oder als Beschichtung.
